# EUROPÄISCHE PATENTANMELDUNG

(11) **EP 1 394 399 A1**
(43) Veröffentlichungstag der Anmeldung: **03.03.2004**
(21) Anmeldenummer: 02019462.7
(22) Anmeldetag: 30.08.2002
(51) Int. Cl.: F02M 25/07, F16K 27/02, F16K 31/06, F16K 37/00

(54) **Fahrzeug-Elektromagnetventil, insbesondere Abgasrückführventil, und Verfahren zur Herstellung eines Fahrzeug-Elektromagnetventils**

(71) Anmelder: Cooper-Standard Automotive (Deutschland) GmbH, 89601 Schelklingen (DE)
(72) Erfinder: Schliesche, Dirk, 68305 Mannheim (DE)
(74) Vertreter: HOFFMANN - EITLE

(57) **Zusammenfassung**

Ein Fahrzeug-Elektromagnetventil (10), insbesondere ein Abgasrückführventil, weist einen Stellantrieb (14) mit einem Magnetgehäuse (54), das aus zumindest einem Blechteil (82, 76, 88) besteht, einen Lagesensor (66, 68) und ein durch Spritzgießen hergestelltes Kunststoffgehäuse (58) auf, in welches das Magnetgehäuse (54) eingebettet ist, und das derart offen ist, dass zumindest Teile (66, 68) des Lagesensors nach dem Umspritzen einsetzbar sind.

Im Rahmen eines Verfahrens zur Herstellung eines Fahrzeug-Elektromagnetventils wird ein Magnetgehäuse aus Blechteilen ausgebildet, dieses wird durch ein Kunststoffgehäuse umspritzt, und nachfolgend werden zumindest Teile eines Lagesensors eingesetzt.

## Beschreibung

### TECHNISCHES GEBIET

Die Erfindung betrifft ein Fahrzeug-Elektromagnetventil, insbesondere ein Abgasrückführventil, sowie ein Verfahren zu dessen Herstellung.

An zahlreichen Stellen in einem Fahrzeug ist die Verwendung von Ventilen erforderlich. Beispiele hierfür sind Schaltventile für Automatikgetriebe, Ventile im Zusammenhang mit Kraftstoffeinspritzvorrichtungen sowie Abgasrückführventile. Für sämtliche Ventile, die in ein Fahrzeug einzubauen sind, bestehen, verglichen mit Ventilen, die im Betrieb stationär sind, Besonderheiten. Diese finden sich insbesondere darin, dass ein Fahrzeug Vibrationen unterworfen ist. Diese können bei einem Elektromagnetventil mit einer Spule dazu führen, dass sich die Wicklungen der Spule lösen. Ferner treten insbesondere bei Abgasrückführventilen vergleichsweise hohe Temperaturen auf. Schließlich unterliegen Ventile, insbesondere bei Anwendungen in einem Fahrzeug, üblicherweise Verschmutzungen.

### STAND DER TECHNIK

Aus der DE 198 31 140 A1 ist ein Abgasrückführventil bekannt, dessen Stellantrieb teilweise von einem Kunststoffgehäuse umspritzt ist. Ein Lagesensor, mit dem die Stellung des Abgasrückführventils erfasst wird, ist in einem eigenen Gehäuse vorgesehen, dessen Rand durch das umspritzte Kunststoffgehäuse eingebunden wird. Das Magnetjoch dieses Magnetventils ist U-förmig.

Aus der DE 43 32 948 A1 ist ein Elektromagnetventil bekannt, das ein tiefgezogenes Magnetgehäuse und ein umspritztes Kunststoffgehäuse aufweist.

Schließlich offenbart die DE 30 27 067 C2 ein Magnetgehäuse für ein nicht näher spezifiziertes Ventil, das aus einem gebogenen Stanzteil besteht.

### DARSTELLUNG DER ERFINDUNG

Der Erfindung liegt die Aufgabe zugrunde, ein Fahrzeug-Elektromagnetventil zu schaffen, das für die beschriebene Anwendung funktional und darüber hinaus kostengünstig herzustellen ist. Ferner soll ein hierfür geeignetes Herstellungsverfahren geschaffen werden.

Die Lösung dieser Aufgabe erfolgt zum einen durch das im Anspruch 1 beschriebene Fahrzeug-Elektromagnetventil.

Demzufolge weist das erfindungsgemäße Ventil einen Stellantrieb mit einem Magnetgehäuse auf, das aus zumindest einem vorzugsweise ausgestanzten Blechteil besteht. In der Verwendung eines ausgestanzten, und damit zunächst flachen Blechteiles, besteht eine erste Besonderheit des erfindungsgemäßen Elektromagnetventils, das, wie erwähnt, in einem Fahrzeug verwendet wird und deshalb besonderen Anforderungen unterliegt. Unter Kostengesichtspunkten lässt sich das Magnetgehäuse des erfindungsgemäßen Ventils äußerst kostengünstig herstellen und bietet deshalb insbesondere in Anbetracht von hohen Stückzahlen, die für ein derartiges Ventil zugrunde zu legen sind, erhebliche Kostenvorteile. Das gestanzte Blechteil kann darüber hinaus in besonders vorteilhafter Weise als weitgehend rundes oder schachtelartiges Gehäuse ausgebildet werden, was hinsichtlich des Bauraums gegenüber einem U-förmigen Magnetjoch Vorteile bietet. Alternativ könnten zumindest Teile des Magnetgehäuses aus einem weitgehend rohrförmigen Ausgangsmaterial gedreht werden. Auch hierdurch sind wirtschaftliche Vorteile verglichen mit dem gegenwärtig praktizierten Drehen aus dem Vollen realisierbar. Alternativ zu dem Ausstanzen flacher Blechteile, die ggfs. nachfolgend zu einer zylindrischen Form gerollt werden, können die verwendeten Blechteile mittels Laser, Wasserstrahl oder'durch ein anderes geeignetes Verfahren ausgeschnitten werden.

Erfindungsgemäß kann ein in dieser Weise gestaltetes Magnetgehäuse auch bei einem Fahrzeug, das naturgemäß erheblichen Vibrationen unterliegt, verwendet werden, indem das beschriebene Magnetgehäuse mit einem durch Spritzgießen herstellten Kunststoffgehäuse kombiniert wird. Gewissermaßen wird das Magnetgehäuse zusammen mit weiteren Bauteilen, die nachfolgend noch genauer erläutert sind, von dem Kunststoff des Kunststoffgehäuses umspritzt und in diesen eingebettet. Hierdurch sind trotz der auftretenden Vibrationen geringere Anforderungen an die Verbindung zwischen einzelnen Bestandteilen des Magnetgehäuses gestellt. Insbesondere sind einzelne Abschnitte eines in geeigneter Weise geformten Blechteils_des Magnetgehäuses dauerhaft miteinander verbunden. Alternativ können in dem Fall, dass das Magnetgehäuse aus mehreren Bestandteilen besteht, diese dauerhaft miteinander verbunden ein. Diese bzw. einzelne Abschnitte eines einzigen Bauteils, welches das Magnetgehäuse bildet, können insbesondere in einfacher und kostengünstiger Art und Weise miteinander gefügt, vorzugsweise verkrimpt werden. Alternativ können die Blechteile miteinander verschweißt, verlötet, vernietet oder verschraubt werden. Der das Magnetgehäuse einbettende Kunststoff des umspritzten Kunststoffgehäuses unterstützt das Magnetgehäuse auch für die erforderliche Stabilität und verhindert ein ungewolltes Lösen der einzelnen Bestandteile voneinander. Das Umspritzen durch ein Kunststoffgehäuse bietet darüber hinaus den Vorteil, dass auch ein Lösen der einzelnen Wicklungen der Magnetspule verhindert werden kann. Schließlich ist Kunststoff ein, verglichen mit Luft, vergleichsweise guter Wärmeleiter, so dass die durch den Betrieb der Magnetspule auftretenden Erwärmungen in günstiger Weise abgeführt werden können. Schließlich kann das umspritzte Kunststoffgehäuse derart geschlossen ausgebildet werden, dass der davon umgebene Stellantrieb in vorteilhafter Weise vor Verschmutzungen und Feuchtigkeit geschützt ist. Ferner werden die innen liegenden Metallteile vor Korrosion geschützt.

Erfindungsgemäß wird darüber hinaus ein Lagesensor bzw. dessen Einzelteile in das umspritzte Kunststoffgehäuse eingebunden, so dass in vorteilhafter Weise kein gesondertes oder zumindest nur ein sehr einfaches Gehäuse für den Sensor erforderlich ist. Zu diesem Zweck wird das Kunststoffgehäuse zunächst derart offen ausgebildet, dass zumindest Teile des Sensors nach dem Umspritzen des Kunststoffgehäuses einsetzbar sind. Hierbei handelt es sich beispielsweise in vorteilhafter Weise um die temperaturempfindlichen Teile des Sensors. Dadurch, dass der Sensor ohne eigenes Gehäuse ausgebildet werden kann, wird für den Hersteller des Elektromagnetventils die Flexibilität erhöht, da der Sensor unabhängig von einem eigenen Gehäuse gestaltet werden kann. Das nachträgliche Einsetzen zumindest der temperaturempfindlichen Teile des Sensors stellt sicher, dass der Sensor während des Umspritzens mit Kunststoff, bei dem erhebliche Temperaturen und Drücke auftreten, nicht beschädigt wird. Zur exakten Lageausrichtung der Komponenten zueinander wird der Innenbereich des Elektromagnetventils durch einen sehr genau gefertigten Stift in der Umspritzungsform gehalten. Dies ermöglicht eine hervorragende Koaxialität und damit Funktionalität der bewegten Komponenten des Magnetventils.

Ferner wird in vorteilhafter Weise eine schrittweise Qualitätsprüfung ermöglicht. Insbesondere dadurch, dass einzelne Komponente nach und nach zu dem erfindungsgemäßen Elektromagnetventil hinzugefügt werden, ist zu zahlreichen Zeitpunkten eine Qualitätsprüfung der bislang eingebauten Komponenten möglich. Beispielsweise können unmittelbar nach dem Umspritzen die bislang eingefügten Komponenten und elektrischen Anschlüsse überprüft werden. Sollte sich hier ein Fehler zeigen, kann in vorteilhafter Weise unter Vermeidung von erheblichem und insbesondere wertvollem Ausschuss ein Aussortieren erfolgen. Erst dann, wenn der Sensor vervollständigt wurde, erfolgt die Prüfung des Sensors, so dass ebenfalls ohne die Durchführung nachfolgender Bearbeitungsschritte ein Aussortieren eines fehlerhaften Ventils oder Sensors möglich wird. Insgesamt wird durch die erfindungsgemäße Merkmalskombination ein sowohl für den beschriebenen, besonderen Anwendungsfall funktionales als auch ein kostengünstig herstellbares Elektromagnetventil geschaffen.

Es ist darauf hinzuweisen, dass einzelne Merkmale des erfindungsgemäßen Elektromagnetventils auch unabhängig voneinander ihre Vorteile entfalten und unabhängig voneinander in einem Elektromagnetventil vorgesehen werden können. Hierbei handelt es sich insbesondere um das Merkmal betreffend ein Umspritzen des Kunststoffgehäuses, das zunächst derart offen ist, dass einzelne Komponenten, insbesondere Teile eines Sensors, nachträglich eingesetzt werden können. Abschließend kann das Gehäuse durch einen Deckel verschlossen werden. Ferner kann unabhängig von weiteren Merkmalen ein Magnetgehäuse, bestehend aus zumindest einem ausgestanzten Blechbauteil, in einer besonders kostengünstigen Art und Weise bei einem Fahrzeug-Elektromagnetventil, insbesondere einem Abgasrückführventil, vorgesehen werden. Die nachfolgend beschriebenen Ausführungsformen einschließlich der Abwandlungen der genannten Merkmale beziehen sich ebenso auf Ventile, welche eines der oben genannten Merkmale unabhängig von den anderen Merkmalen aufweisen.

Bevorzugte Weiterbildungen des erfindungsgemäßen Ventils sind in den weiteren Ansprüchen beschrieben.

Für das Blechteil oder die Blechteile des Magnetgehäuses wird bevorzugt, dass diese(s) miteinander verkrimpt sind/ist. Mit anderen Worten, kann durch geeignete Gestaltung eines vorzugsweise ausgestanzten Blechteiles aus einem einzigen Teil ein weitgehend geschlossenes Magnetgehäuse hergestellt werden, indem das Blechteil durch geeignete Fügetechnik weiter verarbeitet, vorzugsweise gefaltet und/oder gerollt wird, und geeignete Krimpfinger oder -aussparungen miteinander in Eingriff gebracht, und beispielsweise durch Verbiegen oder Umlegen vorstehender Krimpfinger fixiert werden. Grundsätzlich ist es ebenso denkbar, diese zumindest punktweise miteinander zu verschweißen. Alternativ ist die Verwendung von Verlöten, Vernieten oder Verschrauben denkbar. Hierdurch wird immer noch ein erheblicher Kostenvorteil gegenüber den üblicherweise durch Drehen aus dem Vollen ausgebildeten, im Stand der Technik bekannten Magnetgehäusen erreicht.

Insbesondere hat sich im Zusammenhang mit dem Magnetgehäuse des erfindungsgemäßen Ventils herausgestellt, dass besonders vorteilhaft zumindest ein gerolltes Blechbauteil Verwendung findet. Mit anderen Worten, wird ein Blechteil ausgestanzt und nachfolgend weitgehend zylindrisch gerollt, so dass mit einer guten Raumsausnutzung ein Gehäuse ausgebildet wird, das, wegen der zylindrischen Form, auch im Hinblick auf das erzeugte Magnetfeld günstig ist. Schließlich kann durch ein weitgehend zylindrisch gerolltes Blech an der stirnseitigen Anlagefläche zu einem ebenen Blech, das einen Flansch bildet, in vorteilhafter Weise eine plane Stirnfläche erreicht werden, so dass zu dem Flanschteil nur äußerst geringe Luftspalte bleiben, welche die Ausbildung des Magnetfelds negativ beeinflussen können.

Der Kosteneinsparung durch Verwendung weitgehend standardisierter Bauteile dient diejenige bevorzugte Ausführungsform, deren Magnetgehäuse als gesondertes Bauteil ein kundenspezifisch anpassbares Flanschblech aufweist. Mittels des Flanschblechs erfolgt über geeignete Befestigungsöffnungen die Anbringung an weitere Bauteile, beispielsweise das Ventilgehäuse eines Abgasrückführventils. Indem das Flanschblech von den übrigen Komponenten des Magnetgehäuses unabhängig vorgesehen wird, kann es als einziges Bauteil kundenspezifisch angepasst werden, während die übrigen Bauteile vereinheitlicht werden können. Dies ermöglicht eine Kostensenkung und gestattet gleichzeitig die Anpassung an die Gegebenheiten im Umfeld des Stellantriebs des erfindungsgemäßen Elektromagnetventils.

Es hat sich ferner als günstig herausgestellt, das Magnetgehäuse mit Öffnungen zu versehen, so dass der Kunststoff des Kunststoffgehäuses beim Umspritzen in das Innere des Magnetgehäuses gelangen kann, und jegliche Bauteile im Inneren, die in günstiger Weise ebenfalls in den Kunststoff einzubetten sind, umströmen kann. Bevorzugt sind diese Öffnungen symmetrisch um die Mittelachse des Magnetgehäuses angeordnet. Durch eine derartige, geeignete Position der Öffnungen wird zusammen mit einem bevorzugt gleichzeitigen Einspritzen des Kunststoffs aus verschiedenen Richtungen gewissermaßen ein Druckausgleich auf die Gehäuseteile erreicht, die, ebenfalls in Kombination mit dem vorangehend erwähnten Mittelstift, eine Deformation der Teile während des Umspritzungsvorganges wirkungsvoll unterbinden.

Im Hinblick auf die Wärmeabfuhr von der Magnetspule sowie die Sicherung der Wicklungen der Magnetspule gegen ein Lösen infolge von Vibrationen wird ferner bevorzugt, dass zusätzlich die Magnetspule in den Kunststoff des umspritzten Kunststoffgehäuses eingebettet ist.

Hierfür wird ferner bevorzugt, dass die Spule mit einem Spulengrundkörper versehen ist, der zumindest einen Vorsprung und/oder zumindest eine Aussparung aufweist. In die Aussparung oder Ausnehmung kann der flüssige Kunststoff des Kunststoffgehäuses beim Umspritzen eindringen. Ebenso werden jegliche Vorsprünge des Spulengrundkörpers beim Umspritzen mit dem Kunststoff in diesen eingebettet. Durch diese Maßnahmen wird eine besonders feste und zuverlässige Verbindung zwischen dem Spulengrundkörper und dem Kunststoffgehäuse erreicht.

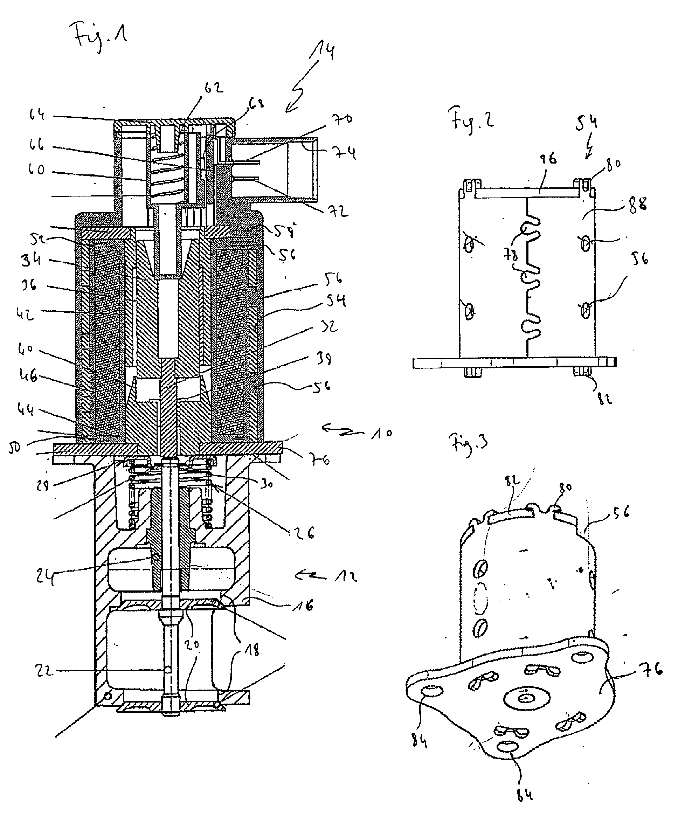

Bevorzugt weist der Innendurchmesser des Spulengrundkörpers zumindest eine, bevorzugt mehrere axial verlaufende Rillen sowie eine Ringnut an seinem oberen Ende auf. Zusammen mit einer bevorzugt in einem oberen Deckel (86, vgl. Fig. 1) ausgebildeten, insbesondere ausgestanzten Bohrung, entsteht somit ein Entlüftungskanal. Dieser ermöglicht, dass die von dem Magnetanker (34 vgl. Fig. 1) verdrängte Luft schnell und damit für die Ventilfunktion vorteilhaft abgeführt wird. Die Rillen am Innendurchmesser des Spulengrundkörpers verlaufen bevorzugt über dessen gesamte Länge, und die Bohrung in dem Deckel ist bevorzugt ausgestanzt.

Im Hinblick auf diejenigen Bauteile des Sensors, die nach dem Umspritzen mit dem Kunststoff eingesetzt werden, wird bevorzugt, dass es sich hierbei z.B. um die Schleiferbahn eines Potentiometers oder elektronische Bauteile eines kontaktlosen Sensors, beispielsweise eines Hall-Sensors, handelt. Diese Komponenten sind besonders temperaturempfindlich, so dass sich die Vorteile der Erfindung insbesondere dann entfalten, wenn diese Komponenten in das bereichsweise offene, durch Umspritzen hergestellte Kunststoffgehäuse einsetzbar sind. Die Schleifer für den Positionsabgriff der Potentiometerfunktion oder auch Komponenten eines berührungslos arbeitenden Sensors sind notwendigerweise an einem Plastikstift befestigt, der die Magnetankerstellung und damit die eigentliche Ventilöffnung misst. Diese Bauteile können nach dem Umspritzungsvorgang und dem Entfernen des Mittelstiftes ebenfalls einfach von oben eingesetzt werden.

Die Lösung der oben genannten Aufgabe erfolgt ferner durch das im Anspruch 10 beschriebene Herstellungsverfahren.

Demzufolge wird im Rahmen der Herstellung eines Fahrzeug-Elektromagnetventils ein Magnetgehäuse aus Blechteilen ausgebildet, die vorangehend vorzugsweise ausgestanzt wurden. Ferner wird das Magnetgehäuse im Rahmen der Herstellung durch ein Kunststoffgehäuse derart umspritzt, dass es nachfolgend darin eingebettet ist. Das Kunststoffgehäuse wird jedoch derart offen ausgebildet, dass erfindungsgemäß erst nachträglich das Einsetzen zumindest einzelner Teile eines Lagesensors erfolgt. Dies bedeutet, wie oben ausgeführt, ein kostengünstiges Herstellungsverfahren mit zahlreichen Möglichkeiten der Funktionskontrolle, das darüber hinaus zu einem für den besonderen Anwendungsfall, besonders zu einem als Abgasrückführventil funktionalen Ventil führt.

Bevorzugte Weiterbildungen des erfindungsgemäßen Verfahrens ergeben sich aus den weiteren Ansprüchen.

Im Wesentlichen in Übereinstimmung mit den bevorzugten Ausführungsformen des erfindungsgemäßen Elektromagnetventils wird im Rahmen des erfindungsgemäßen Verfahrens für das Magnetgehäuse bevorzugt, dass die zunächst vorgesehenen, ausgestanzten Blechteile des Magnetgehäuses miteinander durch geeignete Fügeverfahren gefügt, vorzugsweise verkrimpt werden. Vorangehend wird ferner zumindest ein Bauteil des Magnetgehäuses zu einer weitgehend zylindrischen Gestalt gerollt. Dieses kann als einheitliches Bauteil und damit unter Kosteneinsparung mit einem kundenspezifisch angepassten Flanschblech kombiniert werden. Als Bauteile des Lagesensors, die nach dem Umspritzen mit dem Kunststoff eingesetzt werden, werden zumindest eine Schleiferbahn und ein Schleiferabgriff bevorzugt.

### KURZE BESCHREIBUNG DER ZEICHNUNGEN

Nachfolgend wird eine Ausführung der Erfindung beispielhaft unter Bezugnahme auf die Zeichnungen näher erläutert.

### Es zeigen:

- Fig. 1: eine Schnittdarstellung eines erfindungsgemäßen Elektromagnetventils;
- Fig. 2: eine Seitenansicht des Magnetgehäuses des Elektromagnetventils gemäß Fig. 1; und
- Fig. 3: eine perspektivische Ansicht des Magnetgehäuses des Elektromagnetventils gemäß Fig. 1.

### AUSFÜHRLICHE BESCHREIBUNG BEVORZUGTER AUSFÜHRUNGSFORMEN DER ERFINDUNG

In Fig. 1 ist im Schnitt eine Ausführungsform des erfindungsgemäßen Elektromagnetventils 10 gezeigt. Dieses besteht im Wesentlichen aus einem unten dargestellten Ventilteil 12 und einem oben zu erkennenden Stellantrieb 14. Das Ventilteil 12 weist ein Ventilgehäuse 16 auf, in dem in dem gezeigten Fall zwei Ventilöffnungen 18 ausgebildet sind, die jeweils durch einen Ventilteller 20 verschlossen und geöffnet werden können. Die beiden Ventilteller 20 sind an einem gemeinsamen Ventilstößel 22 angebracht, der bei dem gezeigten Ausführungsbeispiel in einer Führungsbuchse 24 geführt ist. Anstelle der Führungsbuchse kann auch eine geeignete dünne Beschichtung in einer in dem entsprechenden Ventilgehäuse 16 ausgebildeten Bohrung direkt auf dem Grundmaterial, vorzugsweise Aluminium, vorgesehen sein, in welcher der Ventilstößel 22 geführt ist. Die im oberen Bereich des Ventilteiles 12 erkennbare Feder 26 drückt in dem gezeigten Fall über einen Deckel 28, der nach oben hin mittels eines Seegerringes 30 an dem Ventilstößel 22 abgestützt ist, den Ventilstößel 22 und damit die Ventilteller 20 nach oben und hält diese in der geschlossenen Stellung. Anstelle des Seegerringes sowie dem Deckel 28 kann einstückig eine an der Innenbohrung gespreizte Scheibe (Engl.: starlock washer) vorgesehen sein, die durch eine geeignete, in axialer Richtung ausgeführte Montage in eine in dem Ventilstößel 22 ausgebildete Ringnut federnd eingreift und somit ein formschlüssiges, einfach und kostengünstig in Großserie zu fertigendes und montierbares Gegenlager für die Feder 26 bildet.

Die Betätigung des Ventils erfolgt durch den im oberen Bereich der Fig. 1 zu erkennenden Stellantrieb 14. Mit dem Ventilstößel 22 wirkt hierbei ein Stößel 32 zusammen, der mit einem Magnetanker 34 verbunden ist. Der Stößel 32 ist zusammen mit dem Magnetanker 34 in axialer Richtung beweglich, wobei der Magnetanker 34 in einer Führungsbuchse 36, die in dem gezeigten Fall mit einer Teflonlauffläche ausgeführt ist, geführt ist, und nach unten hin ein antimagnetischer Anschlag 38 vorgesehen ist. Der Anschlag 38 ist bei dem gezeigten Ausführungsbeispiel ausgebildet als eine zweite Führungsbuchse, die in einen unteren Magnetkern 40 eingesetzt ist. Zusätzlich ist ein oberer Magnetkern 42 vorhanden. Die beiden Magnetkerne werden von einem sogenannten Spulengrundkörper 44 umgeben, auf den die Spule 46 gewickelt ist. An dem Spulengrundkörper 44 sind in dem unteren, flanschartigen Bereich eine in dem gezeigten Fall umlaufende, schlitzförmige Aussparung 50, und in dem oberen Bereich ebenfalls eine schlitzförmige Aussparung 52 zu erkennen. Diese Aussparungen dienen dazu, ein Einfließen des flüssigen Kunststoffs zu ermöglichen, wenn der Spulengrundkörper 44 einschließlich der daran gewickelten Spule 46 sowie das nachfolgend noch genauer erläuterte Magnetgehäuse mit dem Kunststoff des Kunststoffgehäuses umspritzt werden. Mit der Referenznummer 54 ist das Magnetgehäuse bezeichnet, das, wie im rechten Bereich der Fig. 1 erkennbar, Öffnungen 56 aufweist. Beim Umspritzen des Magnetgehäuses, des Spulenkörpers 44 und der Spule 46 in einer geeigneten Form kann somit der Kunststoff des Kunststoffgehäuses 58 auch in den Bereich zwischen dem Magnetgehäuse 54 und der Spule 46 eindringen, so dass die Komponenten zuverlässig eingebettet werden.

Im äußerst oberen Bereich der Fig. 1 sind diejenigen Maßnahmen ersichtlich, die eine zuverlässige Lagerückmeldung für das Ventil, das insbesondere als Abgasrückführventil verwendet werden kann, ermöglichen. Dazu stützt sich am oberen Bereich des Magnetankers 34 ein sogenannter Potentiometerstößel 60 ab, der durch eine Feder 62, die durch einen abschließend aufgesetzten Deckel 64 abgestützt ist, gegen den Magnetanker 34 gedrückt wird. Wenn sich der Magnetanker 34 infolge einer Beaufschlagung der Spule 46 mit Strom gemäß der Darstellung von Fig. 1 nach unten bewegt, wird der Potentiometerstößel 60 durch die Feder 62 ebenfalls in diese Richtung gedrückt und "folgt" der Bewegung des Magnetankers und damit der Bewegung der Ventilteller 20, so dass eine Lageerfassung des Ventils möglich wird.

Diese Lageerfassung erfolgt im Einzelnen durch die Zusammenwirkung zwischen einer sogenannten stationären Schleiferbahn 66 und einem an dem Stößel 60 vorgesehenen Schleiferabgriff 68. Mit der Schleiferbahn 66 sind drei Kontakte 70 verbunden, von denen in der Schnittdarstelllung nur der mittlere erkennbar ist, um das entsprechende Signal zu einer das Signal verarbeitenden Steuerungseinrichtung zu führen. Unterhalb der Kontakte 70 sind zwei Kontakte 72 ausgebildet, von denen in der Schnittdarstellung von Fig. 1 ebenfalls nur einer erkennbar ist, die der Versorgung der Spule 46 mit Strom dienen. Die Kontakte 70, 72 sind von einem in der Regel kundenspezifischen Steckergehäuse umgeben, das einstückig mit dem Kunststoffgehäuse 58 gespritzt wird, und in das ein geeigneter Gegenstecker einsteckbar ist, um komplementäre Kontakte mit den Kontakten 70, 72 zu verbinden. Die Öffnung 56 im rechten oberen Bereich des Magnetgehäuses 54, gemäß der Darstellung von Fig. 1, dient dem Herausführen der direkt, d.h. einteilig, die elektrischen Anschlüsse an den Kupferwicklungsdraht bildenden Kontakte 72. Am äußersten oberen Ende des Elektromagnetventils 10 ist ein Kunststoffdeckel 64 aufgesetzt, der beispielsweise vorteilhaft durch Ultraschallschweißung fixiert wird.

Die Herstellung des Stellantriebs 14 erfolgt im Wesentlichen wie folgt. Anstelle der Magnetkerne 40 und 42 sowie des Stößels 32 und des Magnetankers 34 wird innerhalb des Spulengrundkörpers 45 ein Kern oder Mittelstift vorgesehen, um diesen Raum für die genannten Komponenten frei zu halten. Nachfolgend werden der Spulengrundkörper 44 zusammen mit der Spule 46 und dem Magnetgehäuse 54 in einer geeigneten Form mit dem Kunststoffgehäuse 58 umspritzt. Nach dem Herausnehmen des vorangehend erwähnten Kerns oder Mittelstifts werden der obere Magnetkern 42, der Magnetanker 34, der Stößel 32 sowie der untere Magnetkern 40 zusammen eingesetzt. Im oberen Bereich kann dann, nach dem Umspritzen, die Schleiferbahn 66 eingebaut und mit den Kontakten 70 vorzugsweise durch eine Widerstandsschweißung verbunden werden. Nachfolgend wird der Potentiometerstößel 60 mit dem Schleiferabgriff 68 und der Feder 62 eingesetzt, und das Gehäuse wird an der oberen Seite durch den Deckel 64 verschlossen. An der Unterseite wird das Magnetgehäuse 54 mit dem Flanschblech 76 verbunden. Die bevorzugte Art dieser Verbindung geht im Einzelnen aus den Fig. 2 und 3 hervor.

In Fig. 2 ist zunächst das Magnetgehäuse 54 mit den darin ausgebildeten Öffnungen 56 gezeigt. Es ist erkennbar, dass das Magnetgehäuse aus einem ersten gestanzten Blechteil 88 weitgehend zylindrisch gerollt ist und an der Nahtstelle durch den Eingriff zwischen Krimpfingern 78 und geeigneten Konturen an dem gegenüberliegenden Rand des gerollten Blechteils 88 geschlossen und fixiert ist. Am oberen und unteren Rand des gerollten Blechteiles 88 sind weitere Krimpfinger 80 bzw. 82 ausgebildet. Die am oberen Rand ausgebildeten Krimpfinger 80 greifen in geeignete, am Rand des weitgehend runden Deckels 86 ausgebildete Ausnehmungen ein und können nachfolgend umgebogen werden.

Dieser, den Deckel 86 fixierende Zustand ist in Fig. 3 gezeigt. Dies gilt in gleicher Weise für die am unteren Rand ausgebildeten Krimpfinger 82, die gemäß Fig. 2 im nicht umgebogenen Zustand dargestellt sind, während sie, wie in Fig. 3, zum Fixieren des Flanschbleches 76 und gleichzeitig des Deckels 86 derart seitlich umgelegt oder umgebogen werden, dass das Flanschblech 76 und der Deckel 86 mit dem weitgehend zylindrischen Blechteil 88 mit minimalen Luftspalten fixiert werden. In der rechten oberen Ecke gemäß der Darstellung von Fig. 3 ist ferner die Öffnung 56 erkennbar, durch welche die Kontakte 72, also die elektrischen Zuführungen der Spule 46 aus dem Magnetgehäuse 54 herausgeführt werden können. Wie in Fig. 3 erkennbar, weist das Flanschblech Befestigungsöffnungen 84 zur Verbindung mit dem in Fig. 1 erkennbaren Flansch des Ventilteils 12 auf. Diese Befestigungsöffnungen 84 können kundenspezifisch ausgebildet werden, so dass im Hinblick auf den Stellantrieb 14 lediglich das Flanschblech 76 kundenspezifisch individualisiert werden muss, während die übrigen Bauteile vereinheitlicht werden können, was zu Kosteneinsparungen führt. Je nach kundenspezifischer Ausführungsform ist das jeweils kundenspezifische Flanschblech 76 durch geeignete Maßnahmen, wie z.B. durch Hohlnieten in den Bohrungen 84 oder, vorteilhafter, durch nicht dargestellte zusätzliche Aussparungen am Flanschblech 76 und einer sogenannten Krimpung (Engl.: staking) der entsprechend mit in diese Aussparung eingreifenden Stege des Ventilgehäuses 16, das vorzugsweise aus Aluminiumdruckguss gefertigt ist, vorzufixieren. Die Endmontage erfolgt durch Verschraubung des Flanschbundes 76 über die Bohrungen 84 zusammen mit dem Ventilgehäuse 16 beispielsweise in ein Saugrohr eines Dieselmotors.

## Patentansprüche

1. Fahrzeug-Elektromagnetventil (10), insbesondere Abgasrückführventil, mit:
- einem Stellantrieb (14) mit einem Magnetgehäuse (54), das aus zumindest einem Blechteil (76, 82, 88) besteht, das vorzugsweise ausgestanzt ist,
- einem Lagesensor (66, 68), und
- einem durch Spritzgießen hergestellten Kunststoffgehäuse (58), in welches das Magnetgehäuse (54) eingebettet ist, und das derart offen ist, dass zumindest Teile des Sensors (66, 68) nach dem Umspritzen einsetzbar sind.

2. Fahrzeug-Elektromagnetventil nach Anspruch 1,
**dadurch gekennzeichnet, dass** das Blechteil (76, 82, 88) ferner verkrimpt ist.

3. Fahrzeug-Elektromagnetventil nach Anspruch 1 oder 2,
**dadurch gekennzeichnet, dass** das Magnetgehäuse (54) aus zumindest einem gerollten Blechteil (88) besteht.

4. Fahrzeug-Elektromagnetventil nach zumindest einem der vorangehenden Ansprüche,
**dadurch gekennzeichnet, dass** dieses als gesondertes Bauteil ein kundenspezifisch anpassbares Flanschblech (76) aufweist.

5. Fahrzeug-Elektromagnetventil nach zumindest einem der vorangehenden Ansprüche,
**dadurch gekennzeichnet, dass** das Magnetgehäuse (54) Öffnungen (56) aufweist.

6. Fahrzeug-Elektromagnetventil nach zumindest einem der vorangehenden Ansprüche,
**dadurch gekennzeichnet, dass** ferner eine Magnetspule (46) in das Kunststoffgehäuse (58) eingebettet ist.

7. Fahrzeug-Elektromagnetventil nach Anspruch 6,
**dadurch gekennzeichnet, dass** die Magnetspule (46) mit einem Spulengrundkörper (44) versehen ist, der zumindest einen Vorsprung und/oder zumindest eine Ausnehmung (50, 52) aufweist.

8. Fahrzeug-Elektromagnetventil nach Anspruch 6 oder 7,
**dadurch gekennzeichnet, dass** die Magnetspule (46) mit einem Spulengrundkörper (44) versehen ist, der am Innendurchmesser zumindest eine axiale Rille aufweist, so dass eine Entlüftung der durch einen Magnetanker (34) verdrängten Luft ermöglicht wird.

9. Fahrzeug-Elektromagnetventil nach zumindest einem der vorangehenden Ansprüche,
**dadurch gekennzeichnet, dass** eine Schleiferbahn (66) und/oder ein Potentiometerstößel mit einem Schleifer als Schleiferabgriff (68) des Lagesensors nach dem Umspritzen einsetzbar sind.

10. Verfahren zur Herstellung eines Fahrzeug-Elektromagnetventils, insbesondere eines Abgasrückführventils, mit folgenden Schritten:
- Ausbilden, vorzugsweise Ausstanzen zumindest eines Blechteils und Formen eines Magnetgehäuses aus dem zumindest einem Blechteil,
- Umspritzen des Magnetgehäuses mit Kunststoff,
- nachfolgendes Einsetzen zumindest von Teilen eines Lagesensors.

11. Verfahren nach Anspruch 10,
**dadurch gekennzeichnet, dass** die Blechteile des Magnetgehäuses ferner miteinander verkrimpt werden.

12. Verfahren nach Anspruch 10 oder 11,
**dadurch gekennzeichnet, dass** zumindest ein Bauteil des Magnetgehäuses zu einer weitgehend zylindrischen Gestalt gerollt wird.

13. Verfahren nach einem der Ansprüche 10 bis 12,
**dadurch gekennzeichnet, dass** als Bestandteil des Magnetgehäuses ein kundenspezifisch angepasstes Flanschblech vorgesehen wird.

14. Verfahren nach einem der Ansprüche 10 bis 13,
**dadurch gekennzeichnet, dass** eine Schleiferbahn und/oder ein Schleiferabgriff nach dem Umspritzen mit dem Kunststoff eingesetzt werden.

15. Verfahren nach einem der Ansprüche 10 bis 14,
**dadurch gekennzeichnet , dass** während des Umspritzens ein Mittelstift oder Kern eingesetzt ist, welcher der koaxialen Führung der zu umspritzenden Bauteile dient.
